# EUROPEAN PATENT APPLICATION

(11) **EP 1 890 512 A1**
(43) Date of publication of application: **20.02.2008**
(21) Application number: 06300881.7
(22) Date of filing: 17.08.2006
(51) Int. Cl.: H04Q 7/38

(54) **Method, apparatus and network for the selection of a target base station for a handover of a user terminal**

(71) Applicant: Alcatel Lucent, 75008 Paris (FR)
(72) Inventor: Kaminski, Stephen, 73054, Eislingen (DE)
(74) Representative: Brose, Gerhard

(57) **Abstract**

The invention concerns a method for a handover procedure of a user terminal (UE) on radio interfaces from a source base station (SBS) to a target base station (TBS) whereby information about at least one of a configuration of the user terminal (UE) and radio channel conditions is sent to at least two potential target base stations (PTBS), said at least two potential target base stations (PTBS) make evaluations based on said information how far a handover of the user terminal (UE) to said at least two potential target base stations (PTBS) is suitable, and a handover decision which of said at least two potential target base stations (PTBS) is selected as target base station (TBS) is made based on said evaluations, a base station (BS1-BS8) and a network (CN) therefor.

## Description

The invention relates to a method for a handover procedure of a user terminal on radio interfaces according to the preamble of claim 1, a base station according to the preamble of claim 7, and a network according to the preamble of claim 8.

Handover procedures of user terminals in cellular networks are performed due to degradation of the radio conditions in the serving cell. During such handovers, the load situation in the target cell is normally assessed, and the decision whether the handover is performed to the target cell, is done based on this information within the target cell only.

This procedure does not take into account information that would be available in other potential target base stations.

So-called pro-active handover procedures would inform more than one potential target base station about the possibility of a handover. This is done sequentially and radio resources would have to be reserved in all potential target base stations for the possibly incoming user terminal.

Current handover procedures do not allow for an optimum usage of radio resources, as only the load situation in the potential target cells is assessed and further information, such as e.g. the actual quality of the uplink or the interference that is currently caused by a roaming user terminal are not taken into account.

Furthermore, in pro-active handovers the resource reservation will often be completely in vain.

A handover procedure according to the prior art is e.g. described for evolved UMTS (UMTS = Universal Mobile Telecommunication System) in chapter 9.4 on pages 32-34 of 3GPP TR 25.912 V0.1.7 (2006-06): "Feasibility Study for Evolved UTRA and UTRAN (Release 7)".

The object of the invention is thus to propose a method for a handover procedure with an improved usage of radio resources by means of finding out the appropriate target base station.

This object is achieved by a method according to the teaching of claim 1, a base station according to the preamble of claim 7, and a network according to the preamble of claim 8.

The main idea of the invention is based on the possibility to prepare a potential target base station by sending the so-called UE context information, i.e. information about a configuration of a user terminal or about radio channel conditions, before the handover decision for the user terminal is made. During the preparation phase at least two potential target base stations are informed about the configuration of the user terminal or the radio channel conditions. These potential target base stations evaluate how far a handover of the user terminal to said potential target base stations is suitable based on their current configuration or the radio channel conditions, like e.g. required quality of service, traffic load, interference or quality of the radio connection. The handover decision is made based on the evaluations of said potential target base stations, and one of said potential target base stations is selected as the target base station.

The potential target base stations do not need to reserve any resources until they are selected as the target base station and informed correspondingly by the current source base station.

Further developments of the invention can be gathered from the dependent claims and the following description.

In the following the invention will be explained further making reference to the attached drawings.
Fig. 1 schematically shows a network in which the invention can be implemented.
Fig. 2 schematically shows exemplarily the information flow for Intra-LTE-Access Mobility Support (LTE = Long Term Evolution).
Fig. 3 schematically shows exemplarily the information flow for Intra-LTE-Access Mobility Support with improved usage of radio resources by means of finding out the appropriate target base station.

A network in which the invention can be implemented comprises user terminals and base stations.

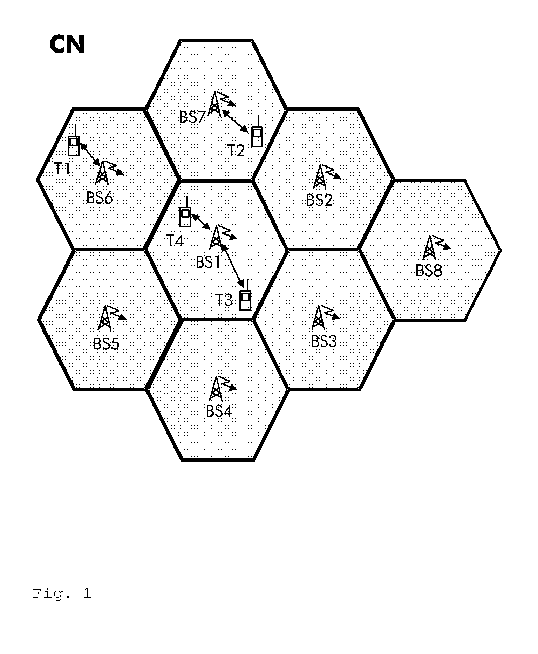

Fig. 1 shows an example for such a network CN that comprises base stations BS1-BS8 and user terminals T1-T4.

Each of said user terminals T1-T4 is connected to one or multiple of said base stations BS1-BS8, which is symbolized by double arrows in fig. 1. The base stations BS1-BS8 are in turn connected to a core network, which is not shown in fig. 1 for the sake of simplicity.

The user terminals T1-T4 comprise the functionality of a user terminal for transmission and reception of signaling and data messages in a network using radio transmission.

The base stations BS1-BS8 comprise the functionality of a base station of a network using radio transmission, i.e. they provide the possibility for user terminals to get connected to said network and for data exchange of said user terminals by means of radio transmission.

Furthermore, a base station BS1-BS8 according to the invention is adapted to perform a handover procedure of a user terminal T1-T4 on radio interfaces from a source base station to a target base station, whereby said base station BS1-BS8 comprises at least one processing means adapted to perform sending of information about at least one of a configuration of the user terminal T1-T4 and radio channel conditions to at least two potential target base stations, adapted to perform making an evaluation based on information about at least one of a configuration of the user terminal T1-T4 and radio channel conditions how far a handover of the user terminal T1-T4 to the base station BS1-BS8 is suitable, and adapted to perform making a handover decision which of said at least two potential target base stations is selected as target base station based on evaluations how far a handover of the user terminal T1-T4 to said at least two potential target base stations is suitable.

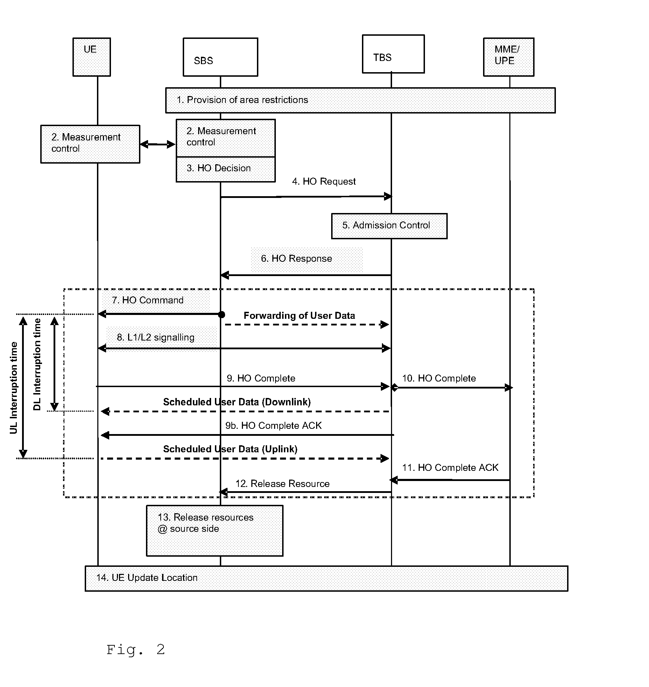

Fig. 2 shows the information flow for Intra-Long-Term-Evolution-Access Mobility Support based on the prior art disclosed in chapter 9.4 of 3GPP TR 25.912 V0.1.7 (2006-06) which will be described in the following.

In step 1, either during connection establishment or at the last Tracking Area (TA) update, the user terminal UE context containing area restriction information regarding roaming restrictions is provided to the source base station SBS.

In step 2, the source base station SBS entity configures the UE measurement procedures according to the area restriction information. Measurements provided by the source base station SBS entity may assist the function controlling the user terminals connection mobility.

In step 3, based on measurement results from the user terminal UE and the source base station SBS, probably assisted by additional radio resource management specific information, the source base station SBS decides to handover the user terminal UE to a cell controlled by the target base station TBS.

In step 4, the source base station SBS issues a handover request ("HO request" message) to the target base station TBS entity passing necessary information to prepare the handover at the target side. The target base station TBS configures the required resources

In step 5, Admission Control is performed by the target base station TBS to check whether the resources can be granted by target base station TBS to increase the likelihood of a successful handover.

In step 6, the handover preparation is finished at the target side, and information for the user terminal UE to reconfigure the radio path towards the target side is passed to the source base station SBS.

From step 7 until 12, which will be described in the following, means to avoid data loss during handover are provided. Details for this procedure are given in §9.4.2.2.2 of 3GPP TR 25.912 V0.1.7 (2006-06).

In step 7, the user terminal UE is commanded by the source base station SBS entity to perform the handover, and target side radio resource information is contained in the handover command ("HO command" message). When the HO command has been sent, the source base station SBS begins forwarding of user data to the target base station TBS.

In step 8, the user terminal UE gains synchronization at the target side.

In step 9, once the user terminal UE has successfully accessed the cell, the user terminal UE sends an indication to the target base station TBS that the handover is completed ("HO complete" message). After reception of the HO complete message, the target base station TBS may begin sending user data to the user terminal UE.

In step 9b, the target base station TBS confirms the reception of the "HO complete" message by means of sending the acknowledge message "HO complete ACK" to the user terminal UE. After reception of the "HO complete ACK" message, the user terminal UE begins sending user data to the target base station TBS.

In step 10, the mobility management entity/user plane entity MME/UPE is informed that the user terminal UE has changed cell. The user plane entity switches the data path to the target side and can release any user-plane/transport network layer resources towards the source base station SBS.

In step 11, the mobility management entity/user plane entity MME/UPE confirms the "HO Complete" message with the "HO Complete ACK" message.

In step 12, the target base station TBS triggers the release of resources at the source side. The target base station TBS can send this message directly after reception of the "HO complete" message in step 9.

In step 13, upon reception of the release resource message from step 12, the source base station SBS can release radio and control-plane related resources in relation to the UE context. The source base station SBS should continue to perform data forwarding until an implementation dependent mechanism decides that data forwarding can be stopped and user-plane/ transport network layer resources can be released.

In step 14, if the new cell is member of a new Tracking Area (TA), the user terminal UE needs to register with the mobility management entity/user plane entity MME/UPE which in turn updates the area restriction information on the target side.

The above mentioned method for the handover execution phase can be improved according to the invention with respect to an improved usage of radio resources by means of finding out the appropriate target base station.

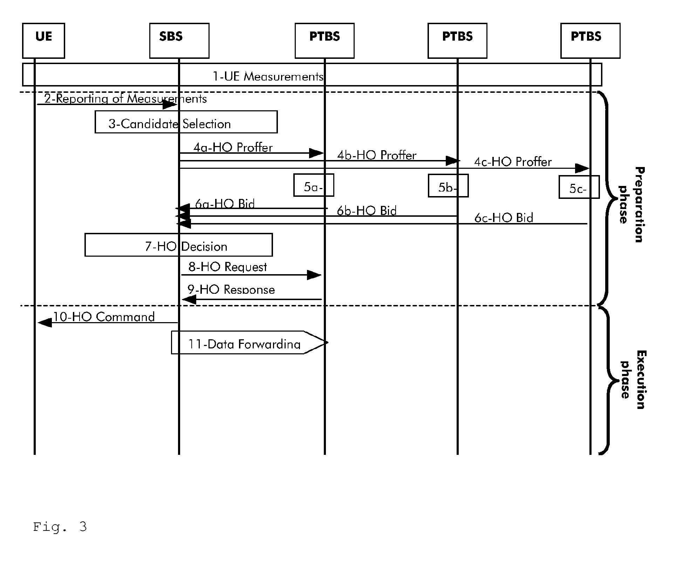

In fig. 3, the information flow for Intra-LTE-Access Mobility Support with improved usage of radio resources by means of finding out the appropriate target base station according to the invention is shown. In the following, the differences with respect to the prior art disclosed above will be described on the basis of fig. 3.

In fig. 3, the information flow between the user terminal UE that is subject of a handover procedure, a source base station SBS that is the serving base station of the user terminal UE and three potential target base stations PTBS to which the user terminal can be handed over is shown.

In step 1, like in the prior art described above, the user terminal UE performs measurements of radio transmissions from base stations. Said measurements comprise e.g. signal strength, signal to interference ratio or error rate.

In step 2, also like in the prior art described above, the user terminal UE sends the results of the measurements to the source base station SBS.

In step 3, the source base station SBS selects potential target base stations PTBS as candidates for the target base station to which the user terminal UE is handed over. This selection is based on the results of the measurements performed by the user terminal UE.

In another embodiment of the invention, the selection of potential target base stations PTBS as candidates for the target base station to which the user terminal UE is handed over is not based on measurements of radio transmission, but on the network structure. As potential target base stations PTBS can e.g. be selected the adjacent base stations of the source base station SBS.

In step 4a, 4b and 4c, the potential target base stations PTBS are prepared for the possibility that the user terminal UE will be handed over to one of the potential target base stations PTBS. During this handover preparation phase, the source base station SBS informs the potential target base stations PTBS by means of a message about the configuration of the user terminal UE or the radio conditions, like e.g. required quality of service, traffic load, interference or quality of the radio connection.

Furthermore, the so-called UE context information comprising the configuration of the user terminal UE may additionally include information about the pilot symbols and the used frequency range for the past, present, or even some future scheduled frequency part(s) for the user terminal UE.

In step 5a, 5b and 5c, each of the potential target base stations PTBS makes an evaluation based on said message about the configuration of the user terminal UE or the radio conditions how far a handover of the user terminal UE to the respective potential target base stations PTBS is suitable.

In an embodiment of the invention, with the information when and with which resources the user terminal UE was, is or will be scheduled, a potential target base station PTBS can evaluate the situation as follows:

As the potential target base station PTBS may already have a statistic over some past transmission time intervals or will collect it over some transmission time intervals, it can assess the interference caused by the user terminal UE in the radio cell's uplink. With information about power restrictions in the uplink for user terminals served by the source base station SBS or the potential target base station PTBS for the frequencies used by the user terminal UE, the potential target base station PTBS can evaluate a measure how much interference is likely caused by the user terminal UE in uplink direction.

A base station has interest in getting a user terminal UE that causes high uplink interference into its own radio cell, as this would turn a drawback of high interference directly into the benefit of good uplink radio channel conditions.

In an embodiment of the invention a potential target base station PTBS checks how good the service requirements of the user terminal UE fit to the already existing requirements of other user terminals that are already served by the potential target base station PTBS.

The more the user terminal UE would fit to the configuration of a potential target base station PTBS, the stronger the request of the potential target base station PTBS to have the user terminal UE handed over will be.

Optionally, a potential target base station PTBS acknowledges the correct reception of the UE context information and the feasibility to take the user terminal UE, e.g. due to available resources.

In step 6a, 6b and 6c, each of the potential target base station PTBS sends a message with the result of said evaluation how far a handover of the user terminal UE to the respective potential target base station PTBS is suitable to the source base station SBS.

In a preferred embodiment, the result of said evaluation is sent in form of a bid-value indicating how much the respective potential target base station PTBS is willing to have the user terminal UE handed over.

According to the result of said evaluation, the currently serving source base station SBS can not only detect, whether it is possible to handover the user terminal UE to the respective potential target base station PTBS, but additionally see how much the respective potential target base station PTBS wants to have the user terminal UE handed over.

In step 7, the handover decision algorithm thus takes into account the results of said evaluations how far a handover of the user terminal UE to said potential target base stations PTBS is suitable.

In step 8, the source base station SBS sends a handover request message to the potential target base station PTBS that is most suited for the handover e.g. because said potential target base station PTBS has sent the highest bid-value.

In another embodiment, the handover decision is made on calculatory combinations of the measurements of the user terminal UE and the bid-values from the potential target base stations PTBS.

## Claims

1. A method for a handover procedure of a user terminal (UE) on radio interfaces from a source base station (SBS) to a target base station (TBS) **characterized in,**
• **that** information about at least one of a configuration of the user terminal (UE) and radio channel conditions is sent to at least two potential target base stations (PTBS),
• **that** said at least two potential target base stations (PTBS) make evaluations based on said information how far a handover of the user terminal (UE) to said at least two potential target base stations (PTBS) is suitable,
• and **that** a handover decision which of said at least two potential target base stations (PTBS) is selected as target base station (TBS) is made based on said evaluations.

2. A method according to claim 1, **characterized in, that** said information comprises at least one of a quality of a radio connection, a required quality of service, used frequency parts for said user terminal (UE) in the past, the present or the future, and information about the used pilot symbols.

3. A method according to claim 1, **characterized in, that** said evaluations are based on an assessment performed in at least one of said at least two potential target base stations (PTBS) of an interference that is caused by said user terminal (UE) in the uplink.

4. A method according to claim 1, **characterized in, that** the potential target base station (PTBS) that is selected as target base station (TBS) reserves resources for the handover of the user terminal (UE) after the selection as target base station (TBS).

5. A method according to claim 1, **characterized in, that** said at least two potential target base stations (PTBS) send the results of said evaluations to the source base station (SBS) and that the handover decision is made by the source base station (SBS).

6. A method according to claim 1, **characterized in, that** said evaluations performed by said at least two potential target base stations (PTBS) are also based on at least one measurement of the radio channel conditions performed in said user terminal (UE) in order to make said handover decision.

7. A base station (BS1-BS8) adapted to perform a handover procedure of a user terminal (UE) on radio interfaces from a source base station (SBS) to a target base station (TBS), **characterized in, that** said base station (BS1-BS8) comprises at least one processing means
• adapted to perform sending of information about at least one of a configuration of the user terminal (UE) and radio channel conditions to at least two potential target base stations (PTBS),
• adapted to perform making an evaluation based on information about at least one of a configuration of the user terminal (UE) and radio channel conditions how far a handover of the user terminal (UE) to the base station (BS1-BS8) is suitable,
• and adapted to perform making a handover decision which of said at least two potential target base stations (PTBS) is selected as target base station (TBS) based on evaluations how far a handover of the user terminal (UE) to said at least two potential target base stations (PTBS) is suitable.

8. A network (CN) using radio transmission adapted for performing a handover procedure of a user terminal from a first base station to a second base station **characterized in, that** said network (CN) comprises at least one base station (BS1-BS8) comprising at least one processing means adapted to perform sending of information about at least one of a configuration of the user terminal (UE) and radio channel conditions to at least two potential target base stations (PTBS), adapted to perform making an evaluation based on information about at least one of a configuration of the user terminal (UE) and radio channel conditions how far a handover of the user terminal (UE) to the base station (BS1-BS8) is suitable, and adapted to perform making a handover decision which of said at least two potential target base stations (PTBS) is selected as target base station (TBS) based on evaluations how far a handover of the user terminal (UE) to said at least two potential target base stations (PTBS) is suitable.
